# DEMANDE DE BREVET EUROPEEN

(11) **EP 2 868 456 A1**
(43) Date de publication de la demande: **06.05.2015**
(21) Numéro de dépôt: 14191746.8
(22) Date de dépôt: 04.11.2014
(51) Int. Cl.: B29C 51/26, B44C 1/22, B44C 3/08, A47K 3/02, B29C 59/02

(54) **Procédé de fabrication par chauffage et déformation d'un élement en matière plastique pourvu de motifs en relief et article ainsi fabriqué**

(30) Priorité: 04.11.2013 FR 1360801
(71) Demandeur: Condor Balneo, 80100 Abbeville (FR)
(72) Inventeur: Sabbagh, Abdallah, 75116 PARIS (FR)
(74) Mandataire: Cabinet Plasseraud

(57) **Abrégé**

Un premier motif en relief (18, 19) est formé sur une première face (B) d'une plaque (10) en matière thermoplastique. La plaque est ensuite chauffée et déformée pour lui donner une forme prédéfinie. La déformation de la plaque fait apparaître un deuxième motif en relief (20, 21) sur une deuxième face (A) de la plaque opposée à la première face. Ce deuxième motif a une géométrie correspondant au premier motif après déformation de la plaque (10).

## Description

La présente invention concerne de la plasturgie et plus particulièrement de la mise en forme d'éléments en matière thermoplastique.

Elle s'applique notamment, mais non exclusivement, aux techniques de thermoformage qui consistent à déformer une plaque en matière thermoplastique chauffée en l'aspirant contre un moule de forme adaptée à celle de l'élément à confectionner.

Des articles très divers sont fabriqués avec ce type de technique. En particulier, c'est le cas d'articles de salle de bains tels que des cuves de baignoires, de lavabos, de bassines, etc.

Il a été proposé, par exemple dans FR 2 308 498 A1, de donner à une baignoire un aspect marbré en plaçant une feuille revêtue d'un motif dessiné au dos d'une plaque en acrylique avant thermoformage de celle-ci. La déformation à chaud de l'acrylique fait alors apparaître le dessin déformé sur le côté visible de la cuve si la plaque est transparente ou translucide au moins de ce côté visible de la cuve. Cette technique, qui comporte en outre un renforcement de la plaque par des fibres de verre, est aussi évoquée dans JP 2001-145579 A.

Il est possible d'obtenir des motifs en relief sur la face visible de la cuve en utilisant une technique de moulage par injection avec des moules appropriés, ou garnis de plaquettes de texturation comme mentionné dans JP 8-276501 A. Cette technique est cependant coûteuse, et elle se prête difficilement à la réalisation d'une variété de modèles avec un même outillage.

Un but de la présente invention est de proposer une autre méthode pour former des motifs, à des fins ornementales ou autres, sur un élément en matière thermoplastique.

Il est proposé un procédé de fabrication d'un élément en matière plastique. Le procédé comprend :
- former un premier motif en relief sur une première face, ci-après nommée face B, d'une plaque en matière thermoplastique ; et
- chauffer et déformer la plaque pour lui donner une forme prédéfinie.

La déformation de la plaque fait apparaître un deuxième motif en relief sur une deuxième face de la plaque, ci-après nommée face A, opposée à la face B. Le deuxième motif de la face A a une géométrie correspondant au premier motif après déformation de la plaque.

La mise en forme peut être effectuée par une technique classique de thermoformage, consistant à aspirer la matière plastique chauffée de la plaque contre un moule de forme déterminée. Par la connaissance préalable de la forme de l'élément, donnée par la forme du moule, on peut anticiper la façon dont le dessin formé sur la face B se déformera pendant le thermoformage pour donner lieu au motif final sur la face A.

Inversement, à partir d'un motif final souhaité sur la face A et de la forme du moule, le calcul permet de déterminer le dessin à former initialement sur la face B.

Un atout remarquable du procédé est qu'on est capable de réaliser une grande variété de motifs sur la face A du produit fini, ceci sans avoir eu besoin de modifier l'outillage de thermoformage employé.

Le motif apparaissant sur la face A du produit fini pourra jouer un rôle ornemental. Une large variété de motifs peut être conçue selon les souhaits des designers. Le motif peut aussi jouer un rôle fonctionnel, selon l'application visée.

La matière plastique de la plaque comprend typiquement un ou plusieurs matériaux parmi le polystyrène, le polyéthylène, le polypropylène, le polycarbonate, l'acrylonitrile butadiène styrène, le polychlorure de vinyle ou le polyméthacrylate de méthyle.

Si le thermoformage a été mentionné ci-dessus comme exemple de technique de mise en forme qui se prête bien au procédé, la déformation de la plaque peut être effectuée par différentes techniques de moulage, par injection ou avec aspiration ou soufflage.

Le premier motif peut comprendre un motif gravé, le deuxième motif correspondant étant un motif en retrait. La plaque peut notamment avoir une épaisseur de 2 à 13 mm, le motif gravé sur la première face ayant une profondeur de 3% à 80% de cette épaisseur. De préférence, la profondeur du motif gravé sera de 10% à 50% de l'épaisseur de la plaque.

Dans certaines réalisations, le procédé comprend en outre le dépôt d'un matériau de comblement, par exemple une résine dans laquelle sont éventuellement noyées des fibres de renforcement, dans le motif gravé sur la première face de la plaque. La matière peut être en résine transparente pour laisser passer la lumière.

Le premier motif peut comprendre un motif par ajout de matière, le deuxième motif correspondant étant un motif en saillie. La plaque peut notamment avoir une épaisseur de 2 à 13 mm, le motif par ajout de matière sur la première face ayant une hauteur de 3% à 80% de cette épaisseur. De préférence, la hauteur du motif par ajout de matière sera de 10% à 50% de l'épaisseur de la plaque.

Un autre aspect de la présente invention se rapporte à un élément en matière plastique comprenant une plaque en matière thermoplastique mise en forme, la plaque ayant une première face présentant un premier motif en relief et, à l'opposé de la première face, une deuxième face formant une face apparente de l'élément, la deuxième face présentant un deuxième motif en relief résultant d'une déformation à chaud de la matière thermoplastique et ayant une géométrie correspondant au premier motif.

Cet élément peut notamment former une paroi de cuve pour une baignoire, lavabo, vasque ou bidet ou la paroi d'une cabine de douche ou d'un autre article de salle de bain.

L'esthétique de l'élément peut éventuellement être mise en valeur en disposant au moins une source lumineuse du côté de la face de la paroi sur laquelle le premier motif a été formé.

L'invention propose ainsi un article de salle de bain, comprenant :
- une paroi en matière thermoplastique ayant une première face présentant un premier motif en relief, et une deuxième face opposée à la première face apparente sur un côté d'utilisation de l'article ; et
- au moins une source lumineuse disposée du côté de la première face de la paroi.

La deuxième face peut avoir un aspect lisse ou, dans un mode de réalisation avantageux, présenter un deuxième motif en relief résultant d'une déformation à chaud de la matière thermoplastique et ayant une géométrie correspondant au premier motif.

La plaque de l'élément en matière plastique et la paroi de l'article de salle de bain peuvent comprendre sur leurs premières faces B un motif gravé 18 et/ou motif par ajout de matière 19. Leurs deuxièmes faces présentent alors respectivement un motif en retrait 20 et/ou un motif en saillie 21 après déformation à chaud.

D'autres articles pouvant être mis en forme selon l'invention comprennent, sans que ceci soit limitatif, des casques de motard ou pour activités sportives, des éléments de véhicules automobiles comme par exemple des pare-chocs, des coques ou boîtiers de divers appareils, etc.

D'autres particularités et avantages de la présente invention apparaîtront dans la description ci-après d'exemples de réalisation non limitatifs, en référence aux dessins annexés, dans lesquels :
- la figure 1 est une vue schématique en coupe d'une plaque en matière thermoplastique avant mise en oeuvre d'un procédé selon l'invention ;
- les figures 1A et 1B sont des vues schématiques en plan de la face A et de la face B de la plaque de la figure 1 ;
- la figure 2 est une vue schématique en coupe de la plaque de la figure 1 à une étape d'un exemple de réalisation du procédé selon l'invention ;
- les figures 2A et 2B sont des vues schématiques en plan de la face A et de la face B de la plaque de la figure 2 ;
- la figure 3 est une vue schématique en coupe de la même plaque à une autre étape du procédé ;
- les figures 3A et 3B sont des vues schématiques en plan de la face A et de la face B de la plaque de la figure 3 ;
- les figures 4 et 5 sont des vues de baignoires à paroi thermoformée constituant des exemples d'éléments selon l'invention ; et
- la figure 6 est une vue montrant la face B d'une plaque plane en acrylique dans laquelle a été gravé un dessin en forme de treillis polygonal irrégulier ;
- la figure 7 montre un détail de la plaque de la figure 6 après usinage ; et
- la figure 8 montre le résultat obtenu sur la face A de la plaque de la figure 7 avec un rétroéclairage du côté de la face B.

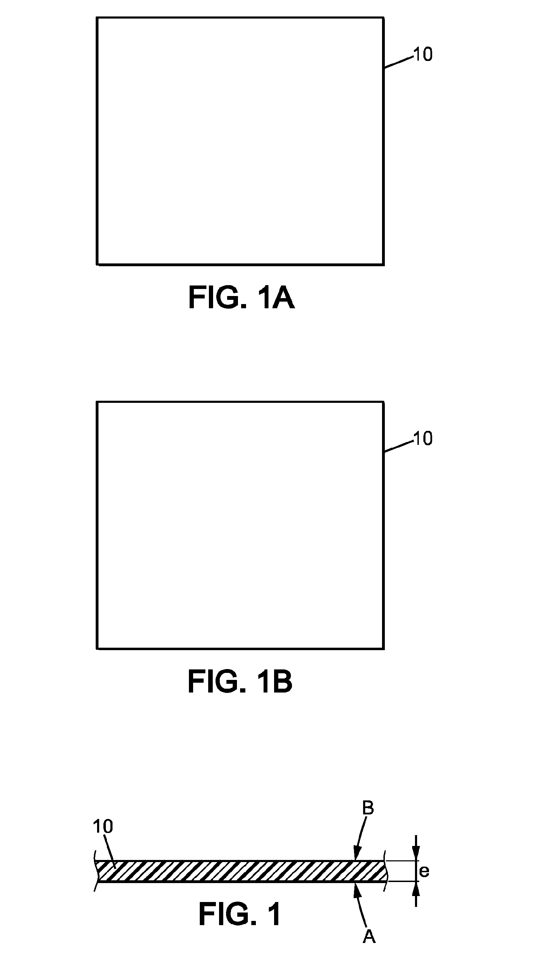

La figure 1 montre une plaque en matière thermoplastique convenant pour la mise en oeuvre d'un procédé selon l'invention. L'épaisseur e de cette plaque est typiquement comprise entre 2 et 8 millimètres. À titre d'exemple, on peut prendre e ≈ 4 mm.

Les figures 1A et 1B montrent respectivement les faces A et B de la plaque 10 qui, initialement, sont dans un état lisse. La face A peut être protégée par un film. La face B est destinée à venir en contact avec le moule utilisé pour mettre en forme un élément à partir de la plaque 10.

La matière thermoplastique de la plaque 10 est par exemple un polyméthacrylate de méthyle (PMMA), un acrylonitrile butadiène styrène (ABS) ou un polyéthylène (PE).

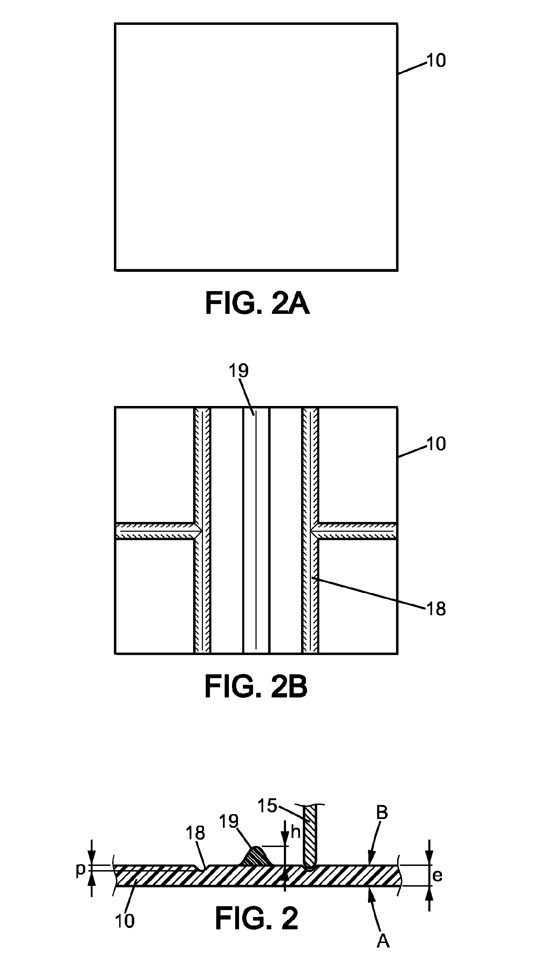

Dans une première étape du procédé selon l'invention (figure 2), un premier motif en relief 18, 19 est formé sur la première face B de la plaque 10.

Par « motif en relief », on entend ici soit un motif en retrait ou en creux par rapport à une surface de la plaque en matière thermoplastique, soit un motif en saillie ou en bosse par rapport à cette surface.

Selon cette première étape du procédé, le premier motif 18 peut être formé par gravure dans la face B de la plaque 10. Cette gravure est effectuée par un outil 15 tel qu'une mèche ou une fraise montée sur la tête d'usinage d'une machine à commande numérique.

L'outil 15 est déplacé le long de la face B de la plaque pour y graver le motif 18 suivant un dessin prédéfini. La profondeur p du motif gravé représente typiquement de 10% à 50% de l'épaisseur e de la plaque 10. À titre d'exemple, on peut prendre p ≈ e × 30%.

La figure 2 montre la forme, toujours lisse, de la face A de la plaque 10 après gravure du motif 18, tandis que la figure 2B montre la face B dans laquelle a été gravé le motif 18.

Selon cette première étape du procédé, le premier motif 19 peut également être formé par ajout de matière sur la face B de la plaque 10.

Cet ajout de matière est effectué par exemple à l'aide d'une imprimante tridimensionnelle (également appelée imprimante 3D). Le motif par ajout de matière 19 peut ainsi être préalablement formé, puis déposé ou fixé, par exemple collé, sur la première face B de la plaque 10. La hauteur h du motif par ajout de matière 19 représente typiquement de l'ordre de 10% à 50% de l'épaisseur e de la plaque. A titre d'exemple, on peut prendre h ≈ e × 30%.

La matière ajoutée du motif 19 est de préférence identique à la matière thermoplastique de la plaque 10. Toutefois, en variante, le motif 19 peut également être constitué d'un matériau différent de celui de la plaque 10, notamment d'un autre matériau plastique.

Selon la première étape du procédé, le premier motif peut comprendre un motif gravé 18 et un motif par ajout de matière 19 (figure 2). Alternativement, la première face B de la plaque 10 peut comprendre uniquement un motif gravé 18 ou uniquement un motif par ajout de matière 19.

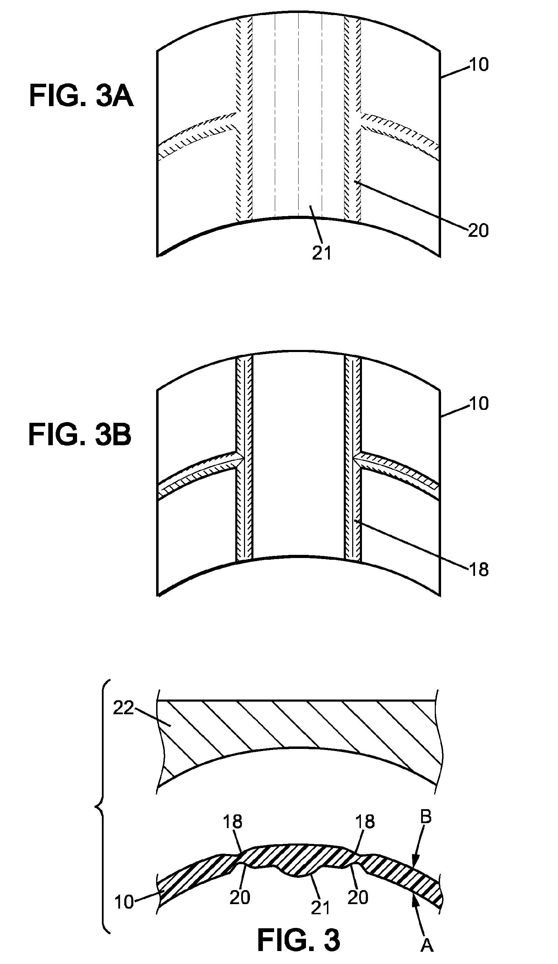

Une étape suivante du procédé (figure 3) est le thermoformage proprement dit de l'élément en matière thermoplastique. De façon connue en soi, la plaque 10 est chauffée et amenée au contact d'un moule 22 ayant la forme prévue pour l'élément fabriqué. La plaque 10 est aspirée sur le moule 22 du côté de sa face B pour prendre la forme prescrite. Dans l'exemple dessiné, le moule est concave. Cela peut toutefois être un moule convexe, ou de forme plus complexe.

Lors du thermoformage, la matière plastique de la plaque 10 est étirée. Au voisinage du motif gravé 18 sur la face B, l'étirement entraîne une contraction de la face A, qui imprime un motif en retrait 20. Au voisinage du motif par ajout de matière 19 sur la face B, l'étirement entraine le déplacement de la matière ajoutée du motif 19 vers la face A, qui imprime un motif en saillie 21 (figures 3A et 3B).

Le motif par ajout de matière 19 formé sur la face B de la plaque 10 peut avoir totalement disparu après le thermoformage, la face B redevenant lisse à l'endroit où le motif 19 a été formé (figure 3B). En variante, le motif par ajout de matière 19 peut encore être visible, au moins partiellement, sur la face B de la plaque 10 après thermoformage.

Le motif en retrait 20 a des bords doux formés par l'étirement et la relaxation de la matière thermoplastique. Il forme un dessin correspondant à celui du motif 18 qui a été initialement gravé sur la face B, compte tenu de la transformation morphologique résultant de la déformation de la plaque 10 sur le moule 22.

Ce motif en retrait à bords doux 20 présente une finition de bonne qualité et un toucher agréable. Il se présente sous la forme de rainures dont la largeur et la profondeur dépendent de la largeur et la profondeur des rainures du motif gravé 18 sur la face B, de l'épaisseur e de la plaque 10, de la température de chauffe et de la forme du moule 22. Un ou quelques essais peuvent être nécessaires pour régler les paramètres optimaux de la gravure (profondeur de gravure p, dimension et forme de l'outil de gravure 15) au regard d'un résultat final escompté.

Le motif en saillie 21 a également des bords doux formés par le déplacement de la matière initialement ajoutée sur la face B de la plaque 10 vers la face A. Il forme un dessin correspondant à celui du motif 19 formé sur la face B, compte tenu de la transformation morphologique résultant de la déformation de la plaque 10 sur le moule 22. De la même façon que pour le motif en retrait 20, la largeur et la hauteur du motif en saillie 21 dépendent de la largeur, de la hauteur, de la quantité de matière ajoutée du motif 19 formé sur la face B, de l'épaisseur e de la plaque 10, de la température de chauffe et de la forme du moule 22. En particulier, le motif en saillie 21 a une largeur plus grande que la largeur du motif 19 du fait du déplacement de la matière thermoplastique lors du thermoformage.

En variante, l'étape de thermoformage peut être réalisée en mettant la face A de la plaque 10 en contact avec le moule 22 de forme adaptée après que le premier motif 18, 19 été formé sur la face B. L'aspect de la face A après mise en forme est alors un peu différent. Notamment le motif en retrait 20 est typiquement plus localisé et paraîtra plus fin. Le motif en saillie 21 est typiquement plus localisé et plus saillant.

Le procédé selon l'invention permet d'utiliser un moule 22 comportant une surface relativement lisse étant donné que le premier motif en relief 18, 19 est directement formé sur la plaque 10 et non pas sur le moule 22. La plaque 10 peut donc facilement être démoulée après l'étape de thermoformage.

Le premier motif 18, 19 peut suivre des lignes droites ou courbes, comme dans l'exemple des figures 2 et 3. Il peut aussi être constitué de points répartis sur la surface de la plaque 10. Ce motif se déforme lors du thermoformage. Un calcul morphologique tenant compte de la forme de l'objet, donnée par la forme du moule 22, permet de prévoir cette déformation pour définir la forme du premier motif à graver ou à former par ajout de matière sur la face B pour obtenir un résultat donné sur la face A.

L'utilisation d'une machine à commande numérique à trois axes permet de graver un motif 18 de forme quelconque à la profondeur p souhaitée. L'utilisation d'une imprimante 3D permet également de former un motif 19 de forme quelconque à la hauteur h souhaitée, par exemple par découpe en tranches, par dépôt ou par solidification de matière couche par couche.

Une large variété d'articles en matière plastique mis en forme à haute température peut bénéficier du procédé.

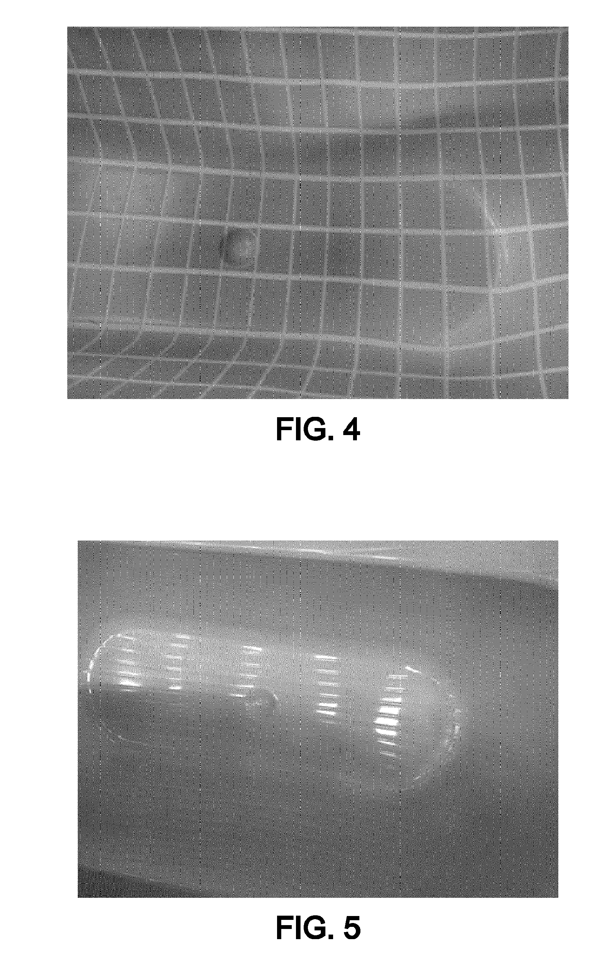

Les figures 4 et 5 montrent des exemples de résultats obtenus sur des baignoires. On peut imaginer une grande variété de modèles de baignoires, lavabos, vasques ou bidets (ou autres articles thermoformés), réalisés à partir d'un même moule de thermoformage, chaque modèle présentant des caractéristiques esthétiques uniques.

D'autres techniques de moulage peuvent bénéficier de l'invention, l'aspiration sur le moule n'étant pas indispensable. La déformation à chaud peut aussi résulter d'un procédé de soufflage.

Une possibilité intéressante est de disposer une ou plusieurs sources lumineuses derrière la paroi de la baignoire, c'est-à-dire du côté de la face B, ce qui permet d'obtenir une esthétique élégante pour une baignoire ou un article analogue.

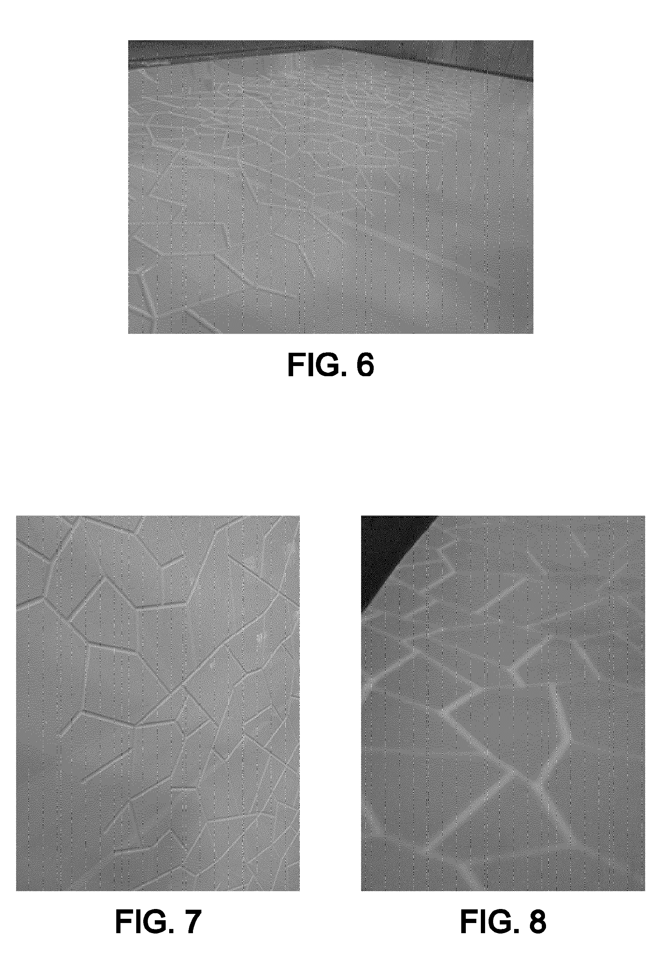

La figure 6 illustre l'usinage de la face B d'une plaque plane en acrylique suivant un dessin en forme de treillis polygonal irrégulier. La figure 7 montre un détail de cette plaque usinée. La figure 8 montre le résultat obtenu sur la face A avec un rétroéclairage de la pièce du côté de la face B.

En mettant un éclairage du côté de la face B, la lumière passe plus facilement aux emplacements où est passé l'outil de gravure 15 et plus difficilement aux emplacements où de la matière a été ajoutée sur la plaque 10.

Une autre possibilité est de déposer sur la face B de la résine, par exemple polyester ou époxy, dans les rainures du motif gravé 18, afin de donner un aspect opaque au motif.

La résine peut éventuellement contenir des fibres de renforcement, par exemple des fibres de verre ou de carbone, afin d'accroître la résistance de la pièce.

Dans une réalisation, le matériau de comblement déposé dans les rainures du motif gravé 18 est transparent ou translucide. Lorsqu'une source lumineuse est placée au dos de l'élément, on garde ainsi la possibilité de faire ressortir le motif rétroéclairé du côté de la face A.

Les modes de réalisation décrits ci-dessus sont des illustrations de la présente invention. Diverses modifications peuvent leur être apportées sans sortir du cadre de l'invention qui ressort des revendications annexées.

## Revendications

1. Procédé de fabrication d'un élément en matière plastique, le procédé comprenant :
- former un premier motif en relief (18, 19) sur une première face (B) d'une plaque (10) en matière thermoplastique ;
- chauffer et déformer la plaque pour lui donner une forme prédéfinie, la déformation de la plaque faisant apparaître un deuxième motif en relief (20, 21) sur une deuxième face (A) de la plaque opposée à la première face, le deuxième motif ayant une géométrie correspondant au premier motif après déformation de la plaque (10).

2. Procédé selon la revendication 1, dans lequel le premier motif comprend un motif gravé (18), le deuxième motif correspondant étant un motif en retrait (20).

3. Procédé selon la revendication 2, dans lequel la plaque (10) a une épaisseur (e) de 2 à 13 mm et le motif gravé (18) a une profondeur (p) de 3 à 80%, de préférence de 10% à 50%, de ladite épaisseur (e).

4. Procédé selon la revendication 1, dans lequel le premier motif comprend un motif par ajout de matière (19), le deuxième motif correspondant étant un motif en saillie (21).

5. Procédé selon la revendication 4, dans lequel la plaque (10) a une épaisseur (e) de 2 à 13 mm et le motif par ajout de matière (19) a une hauteur (h) de 3 à 80%, de préférence de 10% à 50%, de ladite épaisseur (e).

6. Procédé selon l'une quelconque des revendications précédentes, dans lequel la déformation de la plaque (10) est réalisée par aspiration contre un moule (22) du côté de la première face (B).

7. Procédé selon l'une quelconque des revendications 1 à 5, dans lequel la déformation de la plaque (10) est réalisée par soufflage.

8. Procédé selon les revendications 2 ou 3, comprenant en outre :
- déposer un matériau de comblement dans le motif gravé (18) sur la première face (B) de la plaque (10).

9. Procédé selon la revendication 8, dans lequel le matériau de comblement est sensiblement transparent ou translucide.

10. Élément en matière plastique comprenant une plaque (10) en matière thermoplastique mise en forme, la plaque ayant une première face (B) présentant un premier motif en relief (18, 19) et, à l'opposé de la première face, une deuxième face (A) formant une face apparente de l'élément, la deuxième face (A) présentant un deuxième motif en relief (20, 21) résultant d'une déformation à chaud de la matière thermoplastique et ayant une géométrie correspondant au premier motif (18, 19).

11. Élément en matière plastique selon la revendication 10, dans lequel la déformation de la matière thermoplastique de la plaque (10) est réalisée par aspiration contre un moule (22) du côté de la première face (B).

12. Élément en matière plastique selon la revendication 10, dans lequel la déformation de la matière thermoplastique de la plaque (10) est réalisée par soufflage.

13. Article de salle de bain, comprenant :
- une paroi en matière thermoplastique ayant une première face (B) présentant un premier motif en relief (18, 19), et une deuxième face (A) apparente sur un côté d'utilisation de l'article qui présente un deuxième motif en relief (20, 21) résultant d'une déformation à chaud de la matière thermoplastique et ayant une géométrie correspondant au premier motif (18, 19); et
- au moins une source lumineuse disposée du côté de la première face (B) de la paroi.

14. Article de salle de bain selon la revendication 13, dans lequel la déformation de la matière thermoplastique de la paroi est réalisée par aspiration contre un moule (22) du côté de la première face (B).

15. Article de salle de bain selon la revendication 13, dans lequel la déformation de la matière thermoplastique de la paroi est réalisée par soufflage.
